# EUROPEAN PATENT APPLICATION

(11) **EP 4 769 304 A1**
(43) Date of publication of application: **01.07.2026**
(21) Application number: 24932742.0
(22) Date of filing: 30.12.2024
(51) Int. Cl.: G06T 7/11

(54) **REGION SELECTION METHOD, ELECTRONIC DEVICE, AND COMPUTER READABLE STORAGE MEDIUM**

(30) Priority: 29.03.2024 CN 202410381454
(71) Applicant: Huawei Technologies Co., Ltd., Shenzhen, Guangdong 518129 (CN)
(72) Inventor: WANG, Chaoqun, Shenzhen, Guangdong 518129 (CN); PENG, Guanqi, Shenzhen, Guangdong 518129 (CN); DUAN, Xiaoxiao, Shenzhen, Guangdong 518129 (CN); YUAN, Linjie, Shenzhen, Guangdong 518129 (CN); TU, Linlin, Shenzhen, Guangdong 518129 (CN)
(74) Representative: Pfenning, Meinig & Partner mbB
(86) International application number: PCT/CN2024/143922
(87) International publication number: WO 2025/200671

(57) **Abstract**

This application is applicable to the field of terminal technologies, and in particular, relates to a region selection method, an electronic device, and a computer-readable storage medium. In this method, a first image feature of a target image and interaction information for the target image may be obtained, and the first image feature and the interaction information are input into a first region mask generation model for processing, to obtain a first mask result corresponding to the interaction information. In addition, the target image and the first mask result may be input into a second region mask generation model for processing, to obtain a second mask result corresponding to the interaction information, and to determine, based on the second mask result, a target region corresponding to the interaction information. The second region mask generation model may optimize the first mask result based on the target image, to refine an edge of the first mask result and/or a missing region in the first mask result, so that the target region that a user wants to select can be accurately determined based on the second mask result, and an edge of the determined target region is smooth.

## Description

This application claims priority to Chinese Patent Application No. 202410381454.1, filed with the China National Intellectual Property Administration on March 29, 2024 and entitled "REGION SELECTION METHOD, ELECTRONIC DEVICE, AND COMPUTER-READABLE STORAGE MEDIUM", which is incorporated herein by reference in its entirety.

### TECHNICAL FIELD

This application pertains to the field of terminal technologies, and in particular, relates to a region selection method, an electronic device, and a computer-readable storage medium.

### BACKGROUND

In image processing or image drawing, when a user wants to select a region of an image for processing, the user may perform a selection operation such as tapping or box-selection in the image. An electronic device may determine, based on connected component analysis, a connected region corresponding to the selection operation, to determine, based on the connected region, the region selected by the user. Currently, a manner of determining, based on the connected component analysis, the region selected by the user may cause missed selection of a region, selection of an undesired region, or the like, and the determined region may have a problem such as rough edges or jagged edges, resulting in poor user experience.

### SUMMARY

Embodiments of this application provide a region selection method, an electronic device, and a computer-readable storage medium, so that a target region that a user wants to select can be accurately determined, and an edge of the finally determined target region can be smooth, thereby improving user experience.

According to a first aspect, an embodiment of this application provides a region selection method. The method may include:
obtaining a first image feature of a target image and interaction information for the target image;
inputting the first image feature and the interaction information into a first region mask generation model for processing, to obtain a first mask result that corresponds to the interaction information and that is output by the first region mask generation model;
inputting the target image and the first mask result into a second region mask generation model for processing, to obtain a second mask result that corresponds to the interaction information and that is output by the second region mask generation model, where the second region mask generation model has a function of optimizing the first mask result output by the first region mask generation model; and
determining, based on the second mask result, a target region corresponding to the interaction information, where the target region is an image region in the target image.

In the region selection method provided above, when a user selects a region for the target image, an electronic device may obtain the first image feature of the target image and the interaction information for the target image, and input the first image feature and the interaction information into the first region mask generation model for processing, to obtain the first mask result that corresponds to the interaction information and that is output by the first region mask generation model. In addition, the electronic device may input the target image and the first mask result into the second region mask generation model for processing, to obtain the second mask result that corresponds to the interaction information and that is output by the second region mask generation model, and to determine, based on the second mask result, the target region corresponding to the interaction information. The second region mask generation model has a function of optimizing the first mask result output by the first region mask generation model. To be specific, the second region mask generation model may optimize the first mask result based on the target image, to refine an edge of the first mask result, and/or refine a missing region or a redundant region or the like in the first mask result, so that the target region that the user wants to select can be accurately determined based on the second mask result, and the edge of the finally determined target region can be smooth, thereby improving user experience.

For example, the first image feature may be a high-dimensional image feature. In other words, when determining the target region in the target image based on the interaction information, the electronic device may obtain the high-dimensional image feature of the target image, to determine the target region based on the high-dimensional image feature and the interaction information, so that the target region can be accurately determined for a high-resolution image. To be specific, when content of a region that the user wants to select is complex, the electronic device may accurately determine, based on the high-dimensional image feature, the region that the user wants to select, to accurately determine content that the user wants to select, thereby improving user experience.

In a possible implementation of the first aspect, obtaining the first image feature of the target image may include:
inputting the target image into a trained image feature extraction model for processing, to obtain the first image feature output by the image feature extraction model.

In the region selection method provided in this implementation, the first image feature of the target image may be obtained by using the image feature extraction model that has been trained in advance, so that the first image feature can be extracted efficiently and accurately, thereby improving a region selection speed and improving user experience.

For example, the image feature extraction model includes M feature extraction modules and N feature fusion modules, the M feature extraction modules are configured to extract candidate image features that are in different dimensions and that correspond to the target image, and the N feature fusion modules are configured to determine the first image feature based on the candidate image features that are in different dimensions and that are extracted by the M feature extraction modules, where M≥2, and N≥1.

It should be understood that M may be greater than or equal to 2. N may be greater than or equal to 1. Specific values of M and N may be specifically determined based on an actual application scenario. This is not limited in this embodiment of this application. In addition, dimensions of the candidate image feature extracted by each feature extraction module may be determined based on an actual application scenario.

Each feature extraction module may include one or more convolutional neural networks CNN, or may include one or more encoder-decoder networks (for example, a transformer), or may include one or more CNNs and one or more encoder-decoder networks. Each feature fusion module may include one or more CNNs, or may include one or more encoder-decoder networks, or may include one or more CNNs and one or more encoder-decoder networks.

In some embodiments, after obtaining the first image feature output by the image feature extraction model, the method may include:
associating the target image with the first image feature for storage, or associating an identifier of the target image with the first image feature for storage.

In the region selection method provided in this embodiment, for each target image, the first image feature may be extracted only once by using the image feature extraction model. For example, when the target region in the target image is determined for a first time, the first image feature of the target image may be extracted by using the image feature extraction model, and the extracted first image feature may be associated with the target image for storage, or the extracted first image feature may be associated with the identifier of the target image for storage. The identifier of the target image may be a unique identifier such as a name or a number of the target image. Therefore, when the target region in the target image is subsequently determined again (for example, for a second time or a third time), the target region may be directly determined based on the stored first image feature, so that when the target region in the target image is subsequently determined again, the first image feature may not need to be extracted, and a delay of extracting the first image feature can be reduced. In this way, a delay of determining the target region can be reduced, and efficiency of subsequently determining the target region again can be improved, so that the target region can be quickly determined subsequently, thereby improving user experience.

In a possible implementation of the first aspect, the first region mask generation model may include an encoder-decoder module and a convolution module; and
inputting the first image feature and the interaction information into the first region mask generation model for processing, to obtain the first mask result that corresponds to the interaction information and that is output by the first region mask generation model may include:
inputting the first image feature and the interaction information into the first region mask generation model, and processing the first image feature and the interaction information by using the encoder-decoder module, to obtain a second image feature; and
determining, by using the convolution module, a third image feature from the second image feature, and determining, based on the third image feature, the first mask result corresponding to the interaction information, where the third image feature is an image feature that belongs to a same object as an image feature corresponding to the interaction information.

In the region selection method provided in this implementation, the first region mask generation model may accurately determine, by using the encoder-decoder module and the convolution module, the image feature that belongs to the same object as the image feature corresponding to the interaction information, to accurately determine the object that the user wants to select, so as to accurately determine the first mask result corresponding to the interaction information, so that the region that the user wants to select can be accurately obtained, thereby improving user experience. In addition, the first image feature may be a high-dimensional image feature. Therefore, when content of a region that needs to be determined by the user is complex, the first region mask generation model may alternatively accurately determine, based on the high-dimensional first image feature and the interaction information, the region that the user wants to select, to accurately determine content that the user wants to select, thereby improving user experience.

It should be understood that the object in this embodiment of this application may be specifically determined based on an actual application scenario. This is not limited in this embodiment of this application. For example, for a person, the head may be determined as an object, an upper limb may be determined as an object, a lower limb may be determined as an object, a shoulder may be determined as an object, the abdomen may be determined as an object, and the like. Alternatively, hair may be determined as an object, the face may be determined as an object, an upper limb may be determined as an object, a lower limb may be determined as an object, a shoulder may be determined as an object, the abdomen may be determined as an object, and the like.

For example, the interaction information may include position information that is of an interaction operation corresponding to the interaction information and that is in the target image.

For example, the image feature corresponding to the interaction information may be determined from the first image feature based on the position information.

For example, the encoder-decoder module may include one or more encoder-decoder networks, for example, may include one or more transformers. The convolution module may include one or more CNNs, or may include one or more transformers, or may include one or more CNNs and one or more transformers.

In a possible implementation of the first aspect, the interaction information may include first interaction information and second interaction information; and
inputting the first image feature and the interaction information into the first region mask generation model for processing, to obtain the first mask result that corresponds to the interaction information and that is output by the first region mask generation model includes:
inputting the image feature, the first interaction information, and the second interaction information into the first region mask generation model for processing, to obtain the first mask result output by the first region mask generation model, where the first mask result corresponds to the first interaction information and the second interaction information.

In the region selection method provided in this implementation, the user may select one or more regions in the target image based on a plurality of interaction operations. In other words, the user may perform a plurality of interaction operations to accurately select the region that the user wants. When the user selects the one or more regions in the target image based on the plurality of interaction operations, the electronic device may separately determine interaction information corresponding to each interaction operation, and may separately input the interaction information corresponding to each interaction operation into the first region mask generation model. The first region mask generation model may determine, based on the first image feature of the target image and each piece of interaction information, a first mask result corresponding to each piece of interaction information, so that the region that the user wants to select can be accurately determined based on the plurality of interaction operations of the user, thereby improving user experience.

In a possible implementation of the first aspect, the second region mask generation model may include a first sampling module and a second sampling module; and
inputting the target image and the first mask result into the second region mask generation model for processing, to obtain the second mask result that corresponds to the interaction information and that is output by the second region mask generation model may include:
inputting the target image and the first mask result into the second region mask generation model, and performing downsampling on the target image and the first mask result separately by using the first sampling module, to obtain a first sampling feature corresponding to the target image and a second sampling feature corresponding to the first mask result; and
performing upsampling on the first sampling feature and the second sampling feature separately by using the second sampling module, to obtain a third sampling feature corresponding to the first sampling feature and a fourth sampling feature corresponding to the second sampling feature, and determining, based on the third sampling feature and the fourth sampling feature, the second mask result corresponding to the interaction information.

In the region selection method provided in this implementation, the second region mask generation model may perform downsampling and upsampling on the target image and the first mask result respectively by using the first sampling module and the second sampling module, to optimize the first mask result based on a final sampling feature. For example, an edge of a region that corresponds to the interaction information and that is in the first mask result may be optimized, to obtain the second mask result, to mitigate the problem such as rough edges and/or jagged edges, so that an edge of a region that corresponds to the interaction information and that is in the second mask result is smooth. In this way, an edge of the finally determined target region is smooth. For example, the missing region in the first mask result may be determined based on a sampling feature corresponding to the target image, and the missing region may be supplemented to obtain the second mask result, to refine the missing region, so that content of the second mask result is more refined. In this way, content in the finally determined target region is more refined, so that the region that the user wants to select can be accurately selected. For example, the redundant region in the first mask result may be determined based on the sampling feature corresponding to the target image, and the redundant region may be deleted to obtain the second mask result, to refine the redundant region, so that the second mask result accurately corresponds to the interaction information, and the interaction information entered by the user can be accurately understood, thereby accurately determining the target region that the user wants to select, and improving user experience.

For example, the first sampling module may include one or more CNNs, or may include one or more transformers, or may include one or more CNNs and one or more transformers. The second sampling module may include one or more CNNs, or may include one or more transformers, or may include one or more CNNs and one or more transformers.

According to a second aspect, an embodiment of this application provides a region selection apparatus. The apparatus may include:
an interaction information obtaining module, configured to obtain a first image feature of a target image and interaction information for the target image;
a first mask obtaining module, configured to input the first image feature and the interaction information into a first region mask generation model for processing, to obtain a first mask result that corresponds to the interaction information and that is output by the first region mask generation model;
a second mask obtaining module, configured to input the target image and the first mask result into a second region mask generation model for processing, to obtain a second mask result that corresponds to the interaction information and that is output by the second region mask generation model, where the second region mask generation model has a function of optimizing the first mask result output by the first region mask generation model; and
a target region determining module, configured to determine, based on the second mask result, a target region corresponding to the interaction information, where the target region is an image region in the target image.

In a possible implementation of the second aspect, the interaction information obtaining module is further configured to input the target image into a trained image feature extraction model for processing, to obtain the first image feature output by the image feature extraction model.

For example, the image feature extraction model includes M feature extraction modules and N feature fusion modules, the M feature extraction modules are configured to extract candidate image features that are in different dimensions and that correspond to the target image, and the N feature fusion modules are configured to determine the first image feature based on the candidate image features that are in different dimensions and that are extracted by the M feature extraction modules, where M≥2, and N≥1.

In some embodiments, the apparatus may include:
an image feature storage module, configured to associate the target image with the first image feature for storage, or associate an identifier of the target image with the first image feature for storage.

In a possible implementation of the second aspect, the first region mask generation model includes an encoder-decoder module and a convolution module; and
the first mask obtaining module is specifically configured to: input the first image feature and the interaction information into the first region mask generation model, and process the first image feature and the interaction information by using the encoder-decoder module, to obtain a second image feature; and determine, by using the convolution module, a third image feature from the second image feature, and determine, based on the third image feature, the first mask result corresponding to the interaction information, where the third image feature is an image feature that belongs to a same object as an image feature corresponding to the interaction information.

For example, the interaction information includes position information that is of an interaction operation corresponding to the interaction information and that is in the target image.

For example, the image feature corresponding to the interaction information is determined from the first image feature based on the position information.

In a possible implementation of the second aspect, the interaction information includes first interaction information and second interaction information; and
the first mask obtaining module is further configured to input the image feature, the first interaction information, and the second interaction information into the first region mask generation model for processing, to obtain the first mask result output by the first region mask generation model, where the first mask result corresponds to the first interaction information and the second interaction information.

In a possible implementation of the second aspect, the second region mask generation model includes a first sampling module and a second sampling module; and
the second mask obtaining module is specifically configured to: input the target image and the first mask result into the second region mask generation model, and perform downsampling on the target image and the first mask result separately by using the first sampling module, to obtain a first sampling feature corresponding to the target image and a second sampling feature corresponding to the first mask result; and perform upsampling on the first sampling feature and the second sampling feature separately by using the second sampling module, to obtain a third sampling feature corresponding to the first sampling feature and a fourth sampling feature corresponding to the second sampling feature, and determine, based on the third sampling feature and the fourth sampling feature, the second mask result corresponding to the interaction information.

According to a third aspect, an embodiment of this application provides an electronic device, including a memory, a processor, and a computer program that is stored in the memory and that can be run on the processor, where when the processor executes the computer program, the electronic device is caused to implement the region selection method according to any one of the implementations of the first aspect.

According to a fourth aspect, an embodiment of this application provides a computer-readable storage medium, where the computer-readable storage medium stores a computer program, and when the computer program is executed by a computer, the computer is caused to implement the region selection method according to any one of the implementations of the first aspect.

According to a fifth aspect, an embodiment of this application provides a computer program product, where when the computer program product is run on an electronic device, the electronic device is caused to perform the region selection method according to any one of the implementations of the first aspect.

It may be understood that, for beneficial effects of the second aspect to the fifth aspect, refer to related descriptions in the first aspect. Details are not described herein again.

### BRIEF DESCRIPTION OF DRAWINGS

FIG. 1 is a diagram of an application scenario in which region selection is performed based on flood filling;
FIG. 2 is a diagram of a structure of an electronic device to which a region selection method provided in an embodiment of this application is applicable;
FIG. 3 is a diagram of a software architecture to which a region selection method provided in an embodiment of this application is applicable;
FIG. 4 is a schematic flowchart of a region selection method according to an embodiment of this application;
FIG. 5 is a schematic flowchart of extracting a first image feature by an image feature extraction model according to an embodiment of this application;
FIG. 6 is a schematic flowchart of obtaining a first mask result by a first region mask generation model according to an embodiment of this application;
FIG. 7 is a schematic flowchart of obtaining a second mask result by a second region mask generation model according to an embodiment of this application; and
FIG. 8 and FIG. 9 are a diagram of an application scenario according to an embodiment of this application.

### DESCRIPTION OF EMBODIMENTS

It should be understood that the term "include"/"comprise" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if' may be interpreted as "when" or "once" or "in response to determining" or "in response to detecting" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

In addition, in the description of the specification of this application and the appended claims, the terms "first", "second", "third", and the like are merely used for distinguishing descriptions, but cannot be understood as indicating or implying relative importance.

Reference to "one embodiment" or "some embodiments" described in the specification of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In addition, "a plurality of" mentioned in embodiments of this application should be interpreted as two or more.

Steps in a region selection method provided in embodiments of this application are merely examples. Not all steps are mandatory steps, or not content in each piece of information or a message is mandatory. In a use process, the step or the content may be added or removed based on a requirement. In different embodiments, mutual reference is made to a same step or steps or messages having a same function in embodiments of this application.

A service scenario described in embodiments of this application is intended to describe the technical solutions in embodiments of this application more clearly, and does not constitute a limitation on the technical solutions provided in embodiments of this application. Persons of ordinary skill in the art may learn that, with evolution of a network architecture and emergence of a new service scenario, the technical solutions provided in embodiments of this application are also applicable to similar technical problems.

In image processing or image drawing, when a user wants to select a region of an image for processing, the user may manually draw a contour of the selected region, and an electronic device may determine, based on the drawn contour, the region selected by the user. Alternatively, the user may perform a selection operation such as tapping or box-selection in the image, and the electronic device may determine, based on connected component analysis, a connected region corresponding to the selection operation, to determine, based on the connected region, the region selected by the user.

A manner of performing region selection by manually drawing a contour has low efficiency. In addition, when a problem such as hand tremor exists, a finally determined region may not be a region that the user actually wants to select. In a manner of performing region selection based on the connected component analysis, the region that the user actually wants to select cannot be accurately determined, and a problem such as missed selection of a region or selection of an undesired region may be caused. In addition, a region determined in the manner of performing region selection by manually drawing a contour or the manner of performing region selection based on the connected component analysis has a problem such as rough edges or jagged edges, resulting in poor user experience.

When region selection is performed based on the connected component analysis, region selection may be performed based on flood filling. When region selection is performed based on flood filling, the user may tap a region that the user wants to select in the image. The electronic device may determine the region tapped by the user in the image as a start point, and select, from the image based on the start point, a region whose color is similar to that of the start point as the region selected by the user. For example, a region with a similar color may be set to 1, and another region may be set to 0, to obtain a mask result of the region selected by the user.

It should be understood that the electronic device may determine, based on a difference between RGB values of pixels, whether colors are similar. For example, when a difference between RGB values of a pixel and RGB values of a pixel corresponding to the start point is less than or equal to a preset threshold (for example, a preset threshold A), the electronic device may determine that a color of the pixel is similar to that of the start point. Alternatively, when a ratio of a difference between RGB values of a pixel and RGB values of a pixel corresponding to the start point to the RGB values of the pixel corresponding to the start point is less than or equal to a preset threshold (for example, a preset threshold B), the electronic device may determine that a color of the pixel is similar to that of the start point. The preset threshold A and the preset threshold B may be set by the electronic device by default or may be defined by the user, and the user may modify the preset threshold A and the preset threshold B based on an actual requirement.

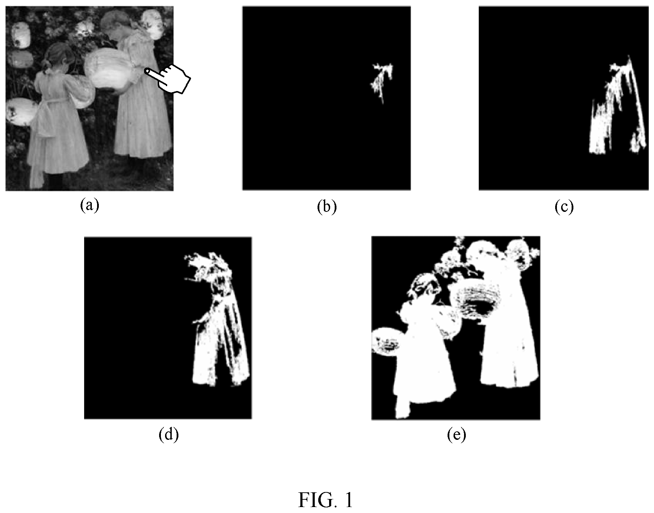

For example, refer to FIG. 1. FIG. 1 is a diagram of an application scenario in which region selection is performed based on flood filling. In this application scenario, an example in which when a ratio of a difference between RGB values of a pixel and RGB values of a pixel corresponding to the start point to the RGB values of the pixel corresponding to the start point is less than or equal to the preset threshold B, it is determined that a color of the pixel is similar to that of the start point is used for description.

As shown in (a) in FIG. 1, when the user wants to select a region in the image, the user may tap the region in the image.

When the preset threshold B=10%, a mask result obtained based on flood filling may be shown in (b) in FIG. 1. When the preset threshold B=25%, a mask result obtained based on flood filling may be shown in (c) in FIG. 1. When the preset threshold B=50%, a mask result obtained based on flood filling may be shown in (d) in FIG. 1. When the preset threshold B=90%, a mask result obtained based on flood filling may be shown in (e) in FIG. 1.

In the foregoing manner of performing region selection based on the connected component analysis, the region selected by the user is determined based on a color, and a problem that the determined region is not a region that the user actually wants to select exists. For example, a problem that the selected region has omission or redundancy, and a problem such as rough edges or jagged edges exists are caused. In addition, when the user wants to select the actually desired region, the user needs to repeatedly adjust the start point and/or the preset threshold, and an operation is complex. In addition, a delay increases with an increase of image resolution, resulting in poor user experience.

It can be learned from the foregoing that, general region selection methods all cause missed selection of a region, selection of an undesired region, or the like, and the determined region may have a problem such as rough edges or jagged edges, resulting in poor user experience.

To resolve the foregoing problems, embodiments of this application provide a region selection method, an electronic device, and a computer-readable storage medium. In this method, when a region is selected for a target image, the electronic device may obtain a first image feature of the target image and interaction information for the target image, and input the first image feature and the interaction information into a first region mask generation model for processing, to obtain a first mask result that corresponds to the interaction information and that is output by the first region mask generation model. In addition, the electronic device may input the target image and the first mask result into a second region mask generation model for processing, to obtain a second mask result that corresponds to the interaction information and that is output by the second region mask generation model, and to determine, based on the second mask result, a target region corresponding to the interaction information. The second region mask generation model has a function of optimizing the first mask result output by the first region mask generation model. To be specific, the second region mask generation model may optimize the first mask result based on the target image, to refine an edge of the first mask result and/or refine a missing region or a redundant region or the like in the first mask result, so that the target region that the user wants to select can be accurately determined based on the second mask result, and the edge of the finally determined target region can be smooth, thereby improving user experience.

In this embodiment of this application, the region selection method may be applied to the electronic device. The electronic device may be an electronic device having a display, for example, a mobile phone, a tablet computer, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a desktop computer. A specific type of the electronic device is not limited in embodiments of this application.

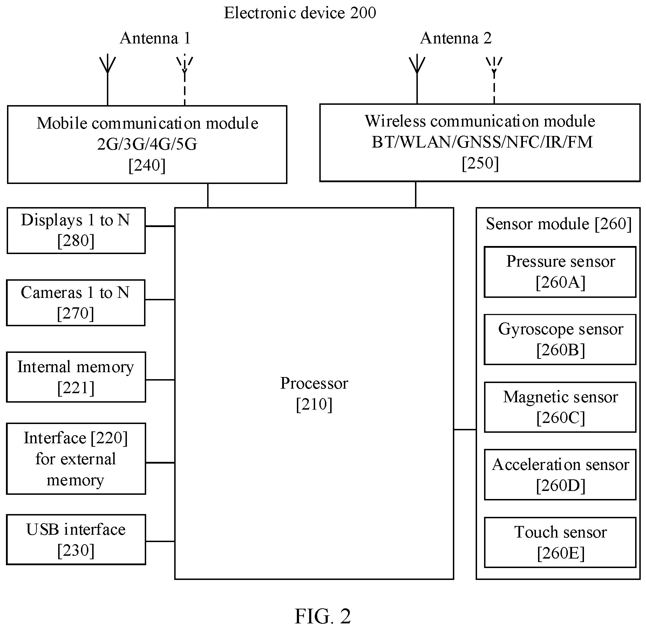

The following first describes the electronic device in embodiments of this application. Refer to FIG. 2. FIG. 2 is a diagram of a structure of an electronic device 200.

The electronic device 200 may include a processor 210, an interface 220 for external memory, an internal memory 221, a universal serial bus (universal serial bus, USB) interface 230, an antenna 1, an antenna 2, a mobile communication module 240, a wireless communication module 250, a sensor module 260, a camera 270, a display 280, and the like. The sensor module 260 may include a pressure sensor 260A, a gyroscope sensor 260B, a magnetic sensor 260C, an acceleration sensor 260D, a touch sensor 260E, and the like.

It may be understood that the structure shown in this embodiment of this application does not constitute a specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

The processor 210 may include one or more processing units. For example, the processor 210 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a timing signal, to complete control of instruction fetching and instruction execution.

A memory may be further disposed in the processor 210, and is configured to store instructions and data. In some embodiments, the memory in the processor 210 is a cache memory. The memory may store an instruction or data that has been used or cyclically used by the processor 210. If the processor 210 needs to use the instruction or the data again, the processor may directly invoke the instruction or the data from the memory. This avoids repeated access, reduces waiting time of the processor 210, and therefore improves system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 210 may include a plurality of groups of I2C buses. The processor 210 may be coupled to the touch sensor 260E, a camera flash, the camera 270, and the like through different I2C bus interfaces. For example, the processor 210 may be coupled to the touch sensor 260E through the I2C interface, so that the processor 210 communicates with the touch sensor 260E through the I2C bus interface, to implement a touch function of the electronic device 200.

The MIPI interface may be configured to connect the processor 210 to a peripheral component such as the display 280 or the camera 270. The MIPI interface includes a camera serial interface (camera serial interface, CSI), a display serial interface (display serial interface, DSI), and the like. In some embodiments, the processor 210 communicates with the camera 270 through the CSI interface, to implement a shooting function of the electronic device 200. The processor 210 communicates with the display 280 through the DSI interface, to implement a display function of the electronic device 200.

The GPIO interface may be configured by software. The GPIO interface may be configured as a control signal or a data signal. In some embodiments, the GPIO interface may be configured to connect the processor 210 to the camera 270, the display 280, the wireless communication module 250, the sensor module 260, and the like. The GPIO interface may alternatively be configured as an I2C interface, an I2S interface, a UART interface, a MIPI interface, or the like.

The USB interface 230 is a port that conforms to a USB standard specification, and may be specifically a mini USB interface, a micro USB interface, a USB Type C interface, or the like. The USB interface 230 may be configured to transmit data between the electronic device 200 and a peripheral device. The interface may be further configured to connect to another electronic device such as an AR device.

It may be understood that an interface connection relationship between modules that is illustrated in this embodiment of this application is merely an example for description, and does not constitute a limitation on a structure of the electronic device 200. In some other embodiments of this application, the electronic device 200 may alternatively use an interface connection manner different from that in the foregoing embodiment, or use a combination of a plurality of interface connection manners.

A wireless communication function of the electronic device 200 may be implemented through the antenna 1, the antenna 2, the mobile communication module 240, the wireless communication module 250, the modem processor, the baseband processor, and the like.

The antenna 1 and the antenna 2 are configured to transmit and receive an electromagnetic wave signal. Each antenna in the electronic device 200 may be configured to cover one or more communication bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 240 may provide a wireless communication solution that is applied to the electronic device 200 and that includes 2G/3G/4G/5G or the like. The mobile communication module 240 may include at least one filter, a switch, a power amplifier, a low noise amplifier (low noise amplifier, LNA), and the like. The mobile communication module 240 may receive an electromagnetic wave through the antenna 1, perform processing such as filtering or amplification on the received electromagnetic wave, and transmit the electromagnetic wave to the modem processor for demodulation. The mobile communication module 240 may further amplify a signal modulated by the modem processor, and convert the signal into an electromagnetic wave for radiation through the antenna 1. In some embodiments, at least some functional modules in the mobile communication module 240 may be disposed in the processor 210. In some embodiments, at least some functional modules of the mobile communication module 240 may be disposed in a same device as at least some modules of the processor 210.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor displays an image or a video by using the display 280. In some embodiments, the modem processor may be an independent component. In some other embodiments, the modem processor may be independent of the processor 210, and is disposed in a same device as the mobile communication module 240 or another functional module.

The wireless communication module 250 may provide a solution applied to the electronic device 200 for wireless communication including wireless local area networks (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field wireless communication (near field communication, NFC) technology, an infrared (infrared, IR) technology, and the like. The wireless communication module 250 may be one or more components integrating at least one communication processing module. The wireless communication module 250 receives an electromagnetic wave through the antenna 2, performs frequency modulation and filtering processing on an electromagnetic wave signal, and sends the processed signal to the processor 210. The wireless communication module 250 may further receive a to-be-sent signal from the processor 210, perform frequency modulation and amplification on the signal, and convert the signal into an electromagnetic wave for radiation through the antenna 2.

In some embodiments, in the electronic device 200, the antenna 1 is coupled to the mobile communication module 240, and the antenna 2 is coupled to the wireless communication module 250, so that the electronic device 200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite-based augmentation systems (satellite-based augmentation systems, SBAS).

The electronic device 200 implements a display function through the GPU, the display 280, the application processor, and the like. The GPU is a microprocessor for image processing, and is connected to the display 280 and the application processor. The GPU is configured to: perform mathematical and geometric computation, and render an image. The processor 210 may include one or more GPUs that execute program instructions to generate or change display information.

The display 280 is configured to display an image, a video, and the like. The display 280 includes a display panel. The display panel may use a liquid crystal display (liquid crystal display, LCD), an organic light-emitting diode (organic light-emitting diode, OLED), an active-matrix organic light-emitting diode or an active-matrix organic light-emitting diode (active-matrix organic light-emitting diode, AMOLED), a flex light-emitting diode (flex light-emitting diode, FLED), a mini-LED, a micro-LED, a micro-OLED, a quantum dot light-emitting diode (quantum dot light-emitting diode, QLED), and the like. In some embodiments, the electronic device 200 may include one or N displays 280, where N is a positive integer greater than 1.

The electronic device 200 may implement a shooting function through the ISP, the camera 270, the video codec, the GPU, the display 280, the application processor, and the like.

The ISP is configured to process data fed back by the camera 270. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of a photographing scene. In some embodiments, the ISP may be disposed in the camera 270.

The camera 270 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 200 may include one or N cameras 270, where N is a positive integer greater than 1.

The digital signal processor is configured to process a digital signal, and may process another digital signal in addition to the digital image signal. For example, when the electronic device 200 selects a frequency, the digital signal processor is configured to perform Fourier transformation and the like on frequency energy.

The video codec is configured to compress or decompress a digital video. The electronic device 200 may support one or more video codecs. In this way, the electronic device 200 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. By drawing on a structure of a biological neural network, for example, by drawing on a transmission mode between human brain neurons, the NPU quickly processes input information, and may further continuously perform self-learning. Applications such as intelligent cognition of the electronic device 200, for example, image recognition, facial recognition, speech recognition, and text understanding, may be implemented through the NPU.

The interface 220 for external memory may be configured to connect to an external storage card, for example, a Micro SD card, to extend a storage capability of the electronic device 200. The external storage card communicates with the processor 210 through the interface 220 for external memory, to implement a data storage function. For example, a file such as a video is stored in the external storage card.

The internal memory 221 may be configured to store computer-executable program code, and the executable program code includes instructions. The internal memory 221 may include a program storage area and a data storage area. The program storage area may store an operating system, an application required by at least one function (for example, a sound playing function or an image playing function), and the like. The data storage area may store data (such as audio data and a phone book) created during use of the electronic device 200, and the like. In addition, the internal memory 221 may include a high-speed random access memory, or may include a non-volatile memory, for example, at least one magnetic disk storage device, a flash memory device, or a universal flash storage (universal flash storage, UFS). The processor 210 runs instructions stored in the internal memory 221 and/or instructions stored in the memory disposed in the processor, to perform various function applications and data processing of the electronic device 200.

The pressure sensor 260A is configured to sense a pressure signal, and may convert the pressure signal into an electrical signal. In some embodiments, the pressure sensor 260A may be disposed on the display 280. There are many types of pressure sensors 260A, such as a resistive pressure sensor, an inductive pressure sensor, and a capacitive pressure sensor. The capacitive pressure sensor may include at least two parallel plates made of conductive materials. When force is applied to the pressure sensor 260A, capacitance between electrodes changes. The electronic device 200 determines pressure intensity based on the change of the capacitance. When a touch operation is performed on the display 280, the electronic device 200 detects intensity of the touch operation by using the pressure sensor 260A. The electronic device 200 may also calculate a touch position based on a detection signal of the pressure sensor 260A. In some embodiments, touch operations performed at a same touch position but having different touch operation intensities may correspond to different operation instructions. For example, when a touch operation whose touch operation intensity is less than a first pressure threshold is performed on an icon of the application Messages, an instruction for viewing a short message service message is executed. When a touch operation whose touch operation intensity is greater than or equal to the first pressure threshold is performed on the icon of the application Messages, an instruction for creating a new short message service message is executed.

The gyroscope sensor 260B may be configured to determine a motion posture of the electronic device 200. In some embodiments, an angular velocity of the electronic device 200 around three axes (that is, axes x, y, and z) may be determined by using the gyroscope sensor 260B. The gyroscope sensor 260B may be configured to implement image stabilization during shooting. For example, when the shutter is pressed, the gyroscope sensor 260B detects an angle at which the electronic device 200 jitters, calculates, based on the angle, a distance for which a lens module needs to compensate, and allows the lens to cancel the jitter of the electronic device 200 through reverse motion, to implement image stabilization. The gyroscope sensor 260B may also be configured to: navigate and sense a game scene.

The magnetic sensor 260C includes a Hall sensor. The electronic device 200 may detect opening and closing of a flip leather case by using the magnetic sensor 260C. In some embodiments, when the electronic device 200 is a flip machine, the electronic device 200 may detect opening and closing of a flip based on the magnetic sensor 260C. Further, a feature such as automatic unlocking upon flipping is set based on a detected opening or closing state of the leather case or a detected opening or closing state of the flip.

The acceleration sensor 260D may detect magnitudes of accelerations of the electronic device 200 in various directions (generally three axes). When the electronic device 200 is still, a magnitude and a direction of gravity may be detected. The acceleration sensor 260D may be further configured to recognize a posture of the electronic device, and is used in an application such as switching between a landscape mode and a portrait mode or a pedometer.

The touch sensor 260E is also referred to as a "touch component". The touch sensor 260E may be disposed on the display 280. A touchscreen includes the touch sensor 260E and the display 280, and is also referred to as a "touch screen". The touch sensor 260E is configured to detect a touch operation performed on or near the touch sensor. The touch sensor may transfer the detected touch operation to the application processor to determine a type of the touch event. A visual output related to the touch operation may be provided through the display 280. In some other embodiments, the touch sensor 260E may also be disposed on a surface of the electronic device 200 at a position different from that of the display 280.

A software system of the electronic device 200 may use a layered architecture, an event-driven architecture, a microkernel architecture, a microservice architecture, or a cloud architecture. For example, the software system of the electronic device 200 may use an Android operating system (Operating System, OS), a Harmony operating system (Harmony OS), or an iOS of the layered architecture. In an embodiment of this application, an Android system with a layered architecture is used as an example to describe a software structure of the electronic device 200.

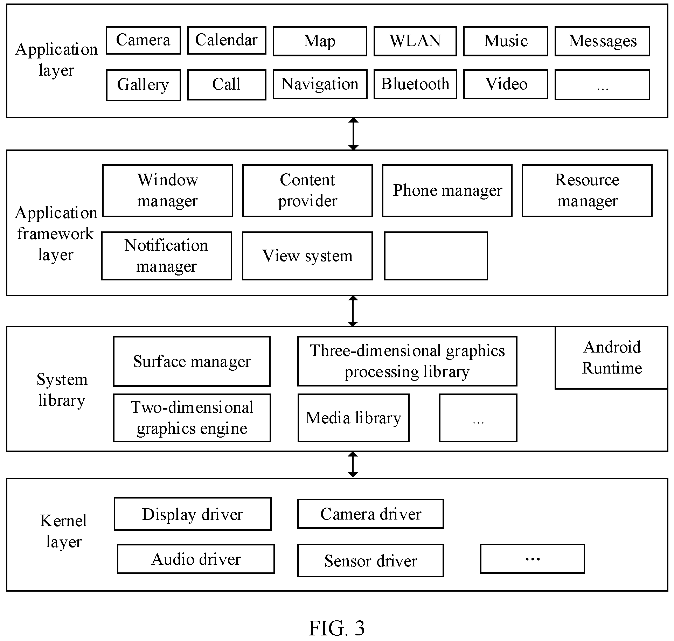

FIG. 3 is a block diagram of a software structure of an electronic device 200 according to an embodiment of this application.

In the layered architecture, software is divided into several layers, and each layer has a clear role and task. The layers communicate with each other through a software interface. In some embodiments, the Android system is divided into four layers: an application layer, an application framework layer, an Android Runtime (Android Runtime) and a system library, and a kernel layer from top to bottom.

The application layer may include a series of application packages.

As shown in FIG. 3, the application packages may include applications such as Camera, Gallery, Calendar, Call, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessible to an application. The data may include a video, an image, audio, calls made and answered, a browse history and a bookmark, a personal address book, and the like.

The view system includes visual controls such as a text display control and a picture display control. The view system may be configured to construct an application. A display interface may include one or more views. For example, a display interface including a short message service message notification icon may include a view that displays texts and a view that displays pictures.

The phone manager is configured to provide a communication function for the electronic device 200, for example, management of a call status (including answering, declining, or the like).

The resource manager provides various resources such as a localized character string, an icon, a picture, a layout file, and a video file for an application.

The notification manager enables an application to display, in the status bar, notification information, which may be used for conveying a notification-type message that may automatically disappear after a short stay without user interaction. For example, the notification manager is configured to: notify download completion, give a message notification, and the like. The notification manager may alternatively be a notification that appears in a top status bar of the system in a form of a chart or scroll bar text, for example, a notification of an application running on the background or a notification that appears on the screen in a form of a dialog window. For example, text information is prompted in the status bar, an alert tone is made, the electronic device vibrates, or an indicator blinks.

The Android Runtime includes a core library and a virtual machine. The Android Runtime is responsible for scheduling and management of the Android system.

The core library includes two parts: a function that needs to be called in Java language and a core library of Android.

The application layer and the application framework layer run in the virtual machine. The virtual machine executes Java files of the application layer and the application framework layer as binary files. The virtual machine is configured to execute functions such as object life cycle management, stack management, thread management, security and exception management, and garbage collection.

The system library may include a plurality of functional modules, for example, a surface manager (surface manager), media libraries (Media Libraries), a three-dimensional graphics processing library (for example, an OpenGL ES), a 2D graphics engine (for example, an SGL), and the like.

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video encoding formats, such as MPEG-4, H.264, MP3, AAC, AMR, JPG, and PNG.

The three-dimensional graphics processing library is configured to implement three-dimensional graphics drawing, image rendering and compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes, in detail with reference to a specific application scenario and accompanying drawings, the region selection method provided in embodiments of this application.

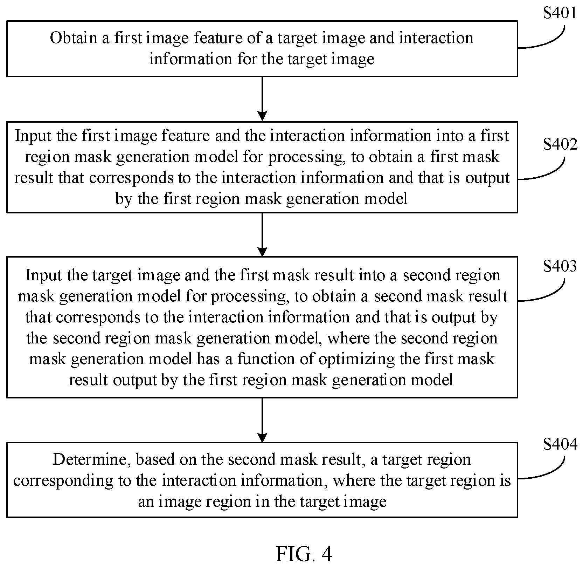

Refer to FIG. 4. FIG. 4 is a schematic flowchart of a region selection method according to an embodiment of this application. The method may be applied to a drawing scenario, or may be applied to an image processing scenario. For example, in the drawing scenario, content or a material may be extracted based on the method. For example, in the image processing scenario, to-be-processed image content may be determined based on the method, to modify or delete determined image content, or the like. As shown in FIG. 4, the method may include:
S401: Obtain a first image feature of a target image and interaction information for the target image.
S402: Input the first image feature and the interaction information into a first region mask generation model for processing, to obtain a first mask result that corresponds to the interaction information and that is output by the first region mask generation model.
S403: Input the target image and the first mask result into a second region mask generation model for processing, to obtain a second mask result that corresponds to the interaction information and that is output by the second region mask generation model, where the second region mask generation model has a function of optimizing the first mask result output by the first region mask generation model.
S404: Determine, based on the second mask result, a target region corresponding to the interaction information, where the target region is an image region in the target image.

In this embodiment of this application, when a user selects a region for the target image, an electronic device may obtain the first image feature of the target image and the interaction information for the target image, and input the first image feature and the interaction information into the first region mask generation model for processing, to obtain the first mask result that corresponds to the interaction information and that is output by the first region mask generation model. In addition, the electronic device may input the target image and the first mask result into the second region mask generation model for processing, to obtain the second mask result that corresponds to the interaction information and that is output by the second region mask generation model, and to determine, based on the second mask result, the target region corresponding to the interaction information. The second region mask generation model has a function of optimizing the first mask result output by the first region mask generation model. To be specific, the second region mask generation model may optimize the first mask result based on the target image, to refine an edge of the first mask result, and/or refine a missing region or a redundant region or the like in the first mask result, so that the target region that the user wants to select can be accurately determined based on the second mask result, and the edge of the finally determined target region can be smooth, thereby improving user experience.

For example, the first image feature may be a high-dimensional image feature. In other words, when determining the target region in the target image based on the interaction information, the electronic device may obtain the high-dimensional image feature of the target image, to determine the target region based on the high-dimensional image feature and the interaction information, so that the target region can be accurately determined for a high-resolution image. To be specific, when content of a region that the user wants to select is complex, the electronic device may accurately determine, based on the high-dimensional image feature, the region that the user wants to select, to accurately determine content that the user wants to select, thereby improving user experience.

It should be noted that dimensions of the first image feature may be determined based on an actual application scenario. This is not limited in this embodiment of this application. For example, it may be determined, based on the actual application scenario, that the dimensions of the first image feature are 64*64*256 (height*width*channel), that is, both a height and a width of the first image feature may be 64, and a quantity of channels may be 256.

In a possible implementation, the electronic device may extract the first image feature of the target image by using a pre-trained image feature extraction model. For example, the image feature extraction model may include M feature extraction modules and N feature fusion modules. The M feature extraction modules may be configured to extract image features (which may be referred to as candidate image features below) that are in different dimensions and that correspond to the target image. To be specific, the dimensions of the candidate image features extracted by the feature extraction modules may be different. The N feature fusion modules may be configured to determine the first image feature of the target image based on the candidate image features that are in different dimensions and that are extracted by the M feature extraction modules. In other words, the N feature fusion modules may fuse the candidate image features in different dimensions, to obtain the first image feature of the target image.

It should be understood that M may be greater than or equal to 2. N may be greater than or equal to 1. Specific values of M and N may be specifically determined based on an actual application scenario. This is not limited in this embodiment of this application. In addition, dimensions of the candidate image feature extracted by each feature extraction module may be determined based on an actual application scenario.

For example, when the M feature extraction modules include a feature extraction module A, a feature extraction module B, a feature extraction module C, a feature extraction module D, and a feature extraction module E, dimensions of a candidate image feature extracted by the feature extraction module A may be 128*128*128, dimensions of a candidate image feature extracted by the feature extraction module B may be 64*64*256, dimensions of a candidate image feature extracted by the feature extraction module C may be 32*32*512, dimensions of a candidate image feature extracted by the feature extraction module D may be 8*8*512, and dimensions of a candidate image feature extracted by the feature extraction module E may be 4*4*512. In this way, downsampling is performed on the target image by using the M feature extraction modules, so that a subsequent calculation amount can be reduced. For example, a calculation amount of determining the first mask result by the first region mask generation model can be reduced, and efficiency of determining the first mask result can be improved, to improve region selection efficiency, thereby improving user experience.

In an example, each feature extraction module may include one or more convolutional neural networks (convolutional neural network, CNN), or may include one or more encoder-decoder networks (for example, a transformer), or may include one or more CNNs and one or more encoder-decoder networks. It should be understood that, quantities of the CNNs and/or quantities of the encoder-decoder networks included in the feature extraction modules may be the same or may be different. The quantities of the CNNs and/or the quantities of the encoder-decoder networks included in the feature extraction modules may be determined based on an actual application scenario. For example, each feature extraction module may include two CNNs. For example, each feature extraction module may include two transformers. For example, each feature extraction module may include one CNN and one transformer. For example, some feature extraction modules may include two CNNs, and the other feature extraction modules may include two transformers.

In another example, each feature fusion module may include one or more CNNs, or may include one or more encoder-decoder networks, or may include one or more CNNs and one or more encoder-decoder networks. It should be understood that, quantities of the CNNs and/or quantities of the encoder-decoder networks included in the feature fusion modules may be the same or may be different. The quantities of the CNNs and/or the quantities of the encoder-decoder networks included in the feature fusion modules may be determined based on an actual application scenario. For example, each feature fusion module may include two CNNs. For example, each feature fusion module may include two transformers. For example, each feature fusion module may include one CNN and one transformer. For example, some feature fusion modules may include two CNNs, and the other feature fusion modules may include two transformers.

The following describes, in detail with reference to the accompanying drawings, a process of extracting the first image feature by the image feature extraction model.

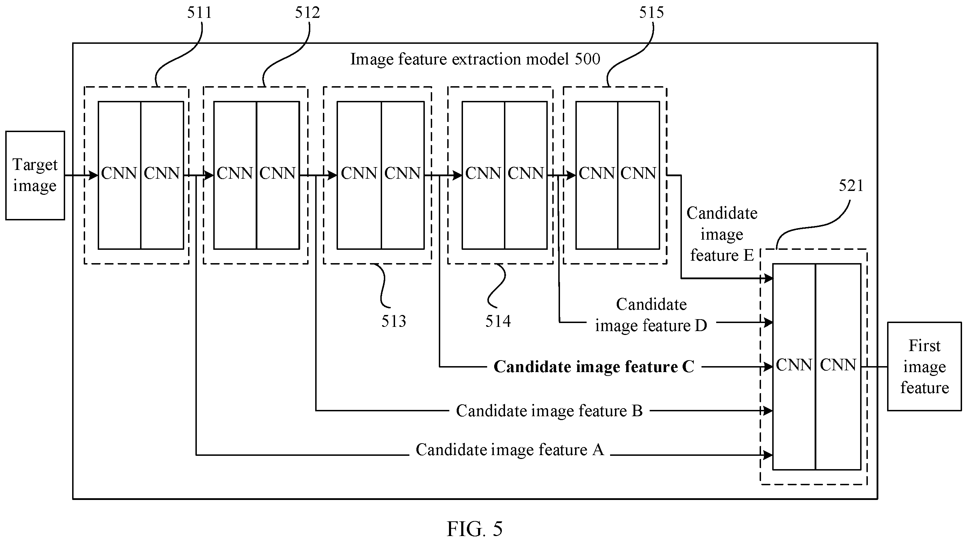

Refer to FIG. 5. FIG. 5 is a schematic flowchart of extracting a first image feature by an image feature extraction model according to an embodiment of this application. In FIG. 5, an example in which the image feature extraction model 500 includes five feature extraction modules and one feature fusion module, each feature extraction module includes two CNNs, and the feature fusion module includes two CNNs is used for description.

As shown in FIG. 5, the image feature extraction model 500 may include a first feature extraction module 511, a second feature extraction module 512, a third feature extraction module 513, a fourth feature extraction module 514, a fifth feature extraction module 515, and a feature fusion module 521. The first feature extraction module 511, the second feature extraction module 512, the third feature extraction module 513, the fourth feature extraction module 514, the fifth feature extraction module 515, and the feature fusion module 521 may each include two CNNs.

As shown in FIG. 5, when the region selected by the user from the target image needs to be determined, the electronic device may input the target image into the image feature extraction model 500.

After the image feature extraction model 500 obtains the target image, the first feature extraction module 511 may extract an image feature from the target image, to obtain a candidate image feature (for example, may be referred to as a candidate image feature A) extracted by the first feature extraction module 511. For example, dimensions of the candidate image feature A may be 128*128*128. After obtaining the candidate image feature A, the first feature extraction module 511 may separately input the candidate image feature A into the second feature extraction module 512 and the feature fusion module 521.

After obtaining the candidate image feature A, the second feature extraction module 512 may extract a feature from the candidate image feature A, to obtain a candidate image feature (for example, may be referred to as a candidate image feature B) extracted by the second feature extraction module 512. For example, dimensions of the candidate image feature B may be 64*64*256. After obtaining the candidate image feature B, the second feature extraction module 512 may separately input the candidate image feature B into the third feature extraction module 513 and the feature fusion module 521.

After obtaining the candidate image feature B, the third feature extraction module 513 may extract a feature from the candidate image feature B, to obtain a candidate image feature (for example, may be referred to as a candidate image feature C) extracted by the third feature extraction module 513. For example, dimensions of the candidate image feature C may be 32*32*512. After obtaining the candidate image feature C, the third feature extraction module 513 may separately input the candidate image feature C into the fourth feature extraction module 514 and the feature fusion module 521.

After obtaining the candidate image feature C, the fourth feature extraction module 514 may extract a feature from the candidate image feature C, to obtain a candidate image feature (for example, may be referred to as a candidate image feature D) extracted by the fourth feature extraction module 514. For example, dimensions of the candidate image feature D may be 8*8*512. After obtaining the candidate image feature D, the fourth feature extraction module 514 may separately input the candidate image feature D into the fifth feature extraction module 515 and the feature fusion module 521.

After obtaining the candidate image feature D, the fifth feature extraction module 515 may extract a feature from the candidate image feature D, to obtain a candidate image feature (for example, may be referred to as a candidate image feature E) extracted by the fifth feature extraction module 515. For example, dimensions of the candidate image feature E may be 4*4*512. After obtaining the candidate image feature E, the fifth feature extraction module 515 may input the candidate image feature E into the feature fusion module 521.

After obtaining the candidate image feature A, the candidate image feature B, the candidate image feature C, the candidate image feature D, and the candidate image feature E, the feature fusion module 521 may process the candidate image feature A, the candidate image feature B, the candidate image feature C, the candidate image feature D, and the candidate image feature E, for example, may fuse the candidate image feature A, the candidate image feature B, the candidate image feature C, the candidate image feature D, and the candidate image feature E, to obtain the first image feature of the target image. For example, dimensions of the first image feature may be 64*64*256.

In this embodiment of this application, for each target image, the first image feature may be extracted only once by using the image feature extraction model 500. For example, when the target region in the target image is determined for a first time, the first image feature of the target image may be extracted by using the image feature extraction model 500, and the extracted first image feature may be associated with the target image for storage, or the extracted first image feature may be associated with an identifier of the target image for storage. The identifier of the target image may be a unique identifier such as a name or a number of the target image. Therefore, when the target region in the target image is subsequently determined again (for example, for a second time or a third time), the target region may be directly determined based on the stored first image feature, so that when the target region in the target image is subsequently determined again, the first image feature may not need to be extracted, and a delay of extracting the first image feature can be reduced. In this way, a delay of determining the target region can be reduced, and efficiency of subsequently determining the target region again can be improved, so that the target region can be quickly determined subsequently, thereby improving user experience.

It should be understood that the image feature extraction model 500 may be obtained in advance through training by using a training image. A training process of the image feature extraction model 500 is not limited in this embodiment of this application. In addition, training of the image feature extraction model 500 may be performed by the electronic device, or may be performed by another device. This is not limited in this embodiment of this application.

In this embodiment of this application, the image feature extraction model 500 is lightweight in terms of performance. Therefore, the image feature extraction model 500 may be disposed in the electronic device. Certainly, the image feature extraction model 500 may alternatively be disposed in another device that is communicatively connected to the electronic device, for example, may be disposed in a cloud that is communicatively connected to the electronic device, to reduce a performance requirement for the electronic device. Similarly, the first image feature extracted by using the image feature extraction model 500 may be associated with the target image (or the identifier of the target image) for storage in the electronic device. Alternatively, the first image feature may be associated with the target image (or the identifier of the target image) for storage in another device that is communicatively connected to the electronic device, for example, may be associated with the target image (or the identifier of the target image) for storage in the cloud that is communicatively connected to the electronic device. Therefore, when the electronic device needs to determine the target region in the target image again, for example, when the user performs an interaction operation in the target image again to select the region in the target image, the electronic device may obtain the first image feature of the target image from the cloud based on the target image, to determine the target region based on the obtained first image feature.

In an example, the interaction information for the target image may be information corresponding to an interaction operation performed in the target image. For example, the interaction information may be position information that is of the interaction operation and that is in the target image. For example, the interaction information may include position information (for example, coordinates) that is of one or more pixels corresponding to the interaction operation and that is in the target image.

It should be understood that the interaction operation may be an operation that is performed by the user in the target image and that is of selecting a region. The interaction operation may be determined based on an actual application scenario. This is not specifically limited in this embodiment of this application. For example, the interaction operation may be an operation of tapping a region in the target image. In this case, the interaction information may include position information that is of one or more pixels corresponding to the tapping operation and that is in the target image. For example, the interaction operation may be an operation of box-selecting a region in the target image. In this case, the interaction information may include position information that is of a plurality of pixels corresponding to the box-selection operation and that is in the target image. A shape box-selected by the box-selection operation is not specifically limited in this embodiment of this application, and may be determined based on an actual application scenario. For example, it may be determined, based on the actual application scenario, that the shape box-selected by the box-selection operation is any shape such as a rectangle, a circle, or an ellipse.

In this embodiment of this application, after the first image feature of the target image is obtained, for example, after the first image feature of the target image is extracted by using the image feature extraction model 500, or after the first image feature stored in advance is obtained based on the target image, the electronic device may input the first image feature into the first region mask generation model. Similarly, after obtaining the interaction information for the target image, the electronic device may input the interaction information into the first region mask generation model. The first region mask generation model may obtain the first mask result based on the first image feature and the interaction information.

The following describes in detail a process in which the first region mask generation model obtains the first mask result based on the first image feature and the interaction information.

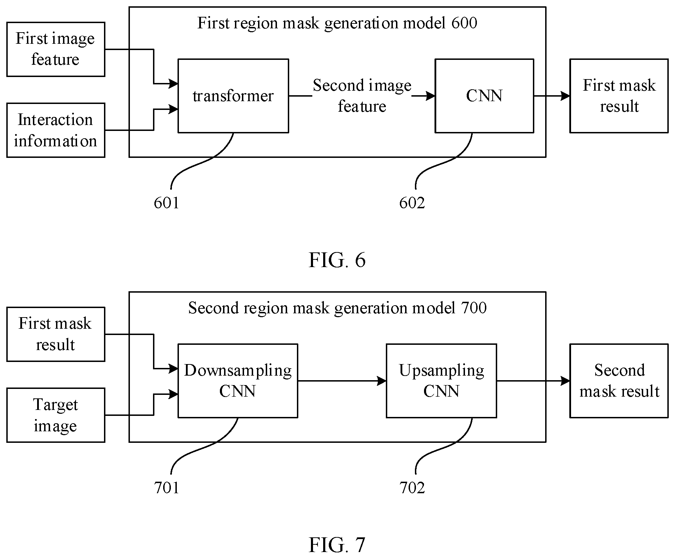

Refer to FIG. 6. FIG. 6 is a schematic flowchart of obtaining a first mask result by a first region mask generation model according to an embodiment of this application.

As shown in FIG. 6, the first region mask generation model 600 may include an encoder-decoder module 601 and a convolution module 602. For example, the encoder-decoder module 601 may include one or more encoder-decoder networks, for example, may include one or more transformers. In FIG. 6, an example in which the encoder-decoder module 601 includes one transformer is used for description. The convolution module 602 may include one or more CNNs, or may include one or more transformers, or may include one or more CNNs and one or more transformers. In FIG. 6, an example in which the convolution module 602 includes one CNN is used for description.

After the first region mask generation model 600 obtains the first image feature of the target image and the interaction information for the target image, the encoder-decoder module (that is, the transformer) 601 may process the first image feature and the interaction information, to obtain the second image feature. For example, the encoder-decoder module 601 may process the first image feature by using the interaction information as prompt information, to increase a weight of an image feature that is in the first image feature and that belongs to a same object as the image feature corresponding to the interaction information, to obtain the first image feature (that is, the second image feature) whose weight is increased. In other words, the second image feature may be an image feature obtained after the first image feature is processed based on the interaction information. Dimensions of the second image feature may be the same as those of the first image feature. After obtaining the second image feature, the encoder-decoder module 601 may output the second image feature to the convolution module 602.

After obtaining the second image feature, the convolution module 602 may sample the second image feature, for example, may perform upsampling on the second image feature, and may determine, based on an image feature obtained through sampling, an image feature (which may be referred to as a third image feature below) that belongs to the same object as the image feature corresponding to the interaction information. Then, the convolution module 602 may determine the first mask result based on the third image feature. The first mask result may be a mask result corresponding to the interaction information. For example, in the first mask result, a region corresponding to the third image feature may be set to white, and another region may be set to black.

In other words, the first region mask generation model 600 may accurately understand, by using the encoder-decoder module 601 and the convolution module 602, the interaction information entered by the user, and may accurately determine the first mask result corresponding to the interaction information, so that the region that the user wants to select can be accurately obtained, thereby improving user experience. In addition, the first image feature may be a high-dimensional image feature. Therefore, when content of a region that needs to be determined by the user is complex, the first region mask generation model 600 may alternatively accurately determine, based on the high-dimensional first image feature and the interaction information, the region that the user wants to select, to accurately determine content that the user wants to select, thereby improving user experience.

For example, the image feature corresponding to the interaction information may include an image feature of one or more pixels corresponding to the interaction operation. To be specific, based on the first image feature and position information that is of the one or more pixels corresponding to the interaction operation and that is in the target image, the image feature (that is, the first image feature corresponding to the position information) corresponding to the interaction information may be determined.

In this embodiment of this application, the first region mask generation model 600 may be obtained in advance through training by using a training image. The training image may include one or more objects, so that the first region mask generation model 600 is trained by using the training image including the one or more objects, so that the first region mask generation model 600 can learn recognition of the object. Therefore, after the first image feature and the interaction information are input into the first region mask generation model 600, the first region mask generation model 600 can accurately recognize the image feature that is in the first image feature and that belongs to the same object as the image feature corresponding to the interaction information, so that the region that the user wants to select can be accurately determined.

It should be understood that the object in this embodiment of this application may be specifically determined based on an actual application scenario. This is not limited in this embodiment of this application. For example, for a person, the head may be determined as an object, an upper limb may be determined as an object, a lower limb may be determined as an object, a shoulder may be determined as an object, the abdomen may be determined as an object, and the like. Alternatively, hair may be determined as an object, the face may be determined as an object, an upper limb may be determined as an object, a lower limb may be determined as an object, a shoulder may be determined as an object, the abdomen may be determined as an object, and the like.

It should be noted that a training process of the first region mask generation model 600 is not specifically limited in this embodiment of this application, and may be specifically determined based on an actual application scenario. Training of the first region mask generation model 600 may be performed by the electronic device, or may be performed by another device. This is not limited in this embodiment of this application. In addition, the first region mask generation model 600 may be disposed in the electronic device, or may be disposed in another device that is communicatively connected to the electronic device, for example, may be disposed in a cloud that is communicatively connected to the electronic device, to reduce a performance requirement for the electronic device.

In a possible implementation, the user may select one or more regions in the target image based on a plurality of interaction operations. In other words, the user may perform a plurality of interaction operations to accurately select the region that the user wants. When the user selects the one or more regions in the target image based on the plurality of interaction operations, the electronic device may separately determine interaction information corresponding to each interaction operation, and may separately input the interaction information corresponding to each interaction operation into the first region mask generation model 600. The first region mask generation model 600 may determine, based on the first image feature of the target image and each piece of interaction information, a first mask result corresponding to each piece of interaction information, to accurately determine, based on the plurality of pieces of interaction information, the first mask result corresponding to the region selected by the user.

For example, when detecting that the interaction operation for the target image includes an interaction operation A and an interaction operation B, the electronic device may separately determine interaction information corresponding to the interaction operation A and interaction information corresponding to the interaction operation B. Assuming that the electronic device determines that the interaction information corresponding to the interaction operation A is interaction information A, and the interaction information corresponding to the interaction operation B is interaction information B, the electronic device may input both the interaction information A and the interaction information B into the first region mask generation model 600. The encoder-decoder module 601 in the first region mask generation model 600 may process the first image feature based on the interaction information A and the interaction information B, to increase a weight of an image feature that is in the first image feature and that belongs to a same object as the image feature corresponding to the interaction information A, and increase a weight of an image feature that is in the first image feature and that belongs to a same object as the image feature corresponding to the interaction information B, so as to obtain the second image feature, and may output the second image feature to the convolution module 602.

After obtaining the second image feature, the convolution module 602 may sample the second image feature, and may determine, based on an image feature obtained through sampling, an image feature (which may be referred to as a third image feature A below) that belongs to the same object as the image feature corresponding to the interaction information A, and may determine an image feature (which may be referred to as a third image feature B below) that belongs to the same object as the image feature corresponding to the interaction information B. Then, the convolution module 602 may determine the first mask result based on the third image feature A and the third image feature B. The first mask result is a mask result corresponding to the interaction information A and the interaction information B. For example, in the first mask result, both a region corresponding to the third image feature A and a region corresponding to the third image feature B may be set to white, and another region may be set to black.

In this embodiment of this application, after determining the first mask result, the first region mask generation model 600 may output the first mask result to the second region mask generation model. After obtaining the first mask result and the target image, the second region mask generation model may optimize the first mask result based on the target image, to obtain the second mask result. The second region mask generation model has a function of optimizing the first mask result. For example, the second region mask generation model may optimize an edge of a region (for example, the white region in the first mask result) that corresponds to the interaction information and that is in the first mask result, to obtain the second mask result, to mitigate the problem such as rough edges and/or jagged edges, so that an edge of a region that corresponds to the interaction information and that is in the second mask result is smooth. In this way, an edge of the finally determined target region is smooth. For example, the second region mask generation model may determine the missing region in the first mask result based on the target image, and may supplement the missing region to obtain the second mask result, to refine the missing region, so that content of the second mask result is more refined. In this way, content in the finally determined target region is more refined, so that the region that the user wants to select can be accurately selected. For example, the second region mask generation model may determine the redundant region in the first mask result based on the target image, and may delete the redundant region to obtain the second mask result, to refine the redundant region, so that the second mask result accurately corresponds to the interaction information, and the interaction information entered by the user can be accurately understood, thereby accurately determining the target region that the user wants to select, and improving user experience.

The following describes in detail a process in which the second region mask generation model obtains the second mask result based on the second image feature and the target image.

Refer to FIG. 7. FIG. 7 is a schematic flowchart of obtaining a second mask result by a second region mask generation model according to an embodiment of this application.

As shown in FIG. 7, the second region mask generation model 700 may include a first sampling module 701 and a second sampling module 702. For example, the first sampling module 701 may include one or more CNNs, or may include one or more transformers, or may include one or more CNNs and one or more transformers. In FIG. 7, an example in which the first sampling module 701 includes one CNN is used for description. Similarly, the second sampling module 702 may include one or more CNNs, or may include one or more transformers, or may include one or more CNNs and one or more transformers. In FIG. 7, an example in which the second sampling module 702 includes one CNN is used for description.

After the second region mask generation model 700 obtains the target image and the first mask result that is input by the first region mask generation model 600, the first sampling module 701 (that is, the downsampling CNN in FIG. 7) may perform downsampling on the target image to obtain a sampling feature (which may be referred to as a first sampling feature below) corresponding to the target image, and may output the first sampling feature to the second sampling module 702 (that is, the upsampling CNN in FIG. 7). Similarly, the first sampling module 701 may further perform downsampling on the first mask result to obtain a sampling feature (which may be referred to as a second sampling feature below) corresponding to the first mask result, and may output the second sampling feature to the second sampling module 702.

After obtaining the first sampling feature and the second sampling feature, the second sampling module 702 may perform upsampling on the first sampling feature to obtain a sampling feature (which may be referred to as a third sampling feature below) corresponding to the first sampling feature, and may perform upsampling on the second sampling feature to obtain a sampling feature (which may be referred to as a fourth sampling feature below) corresponding to the second sampling feature. Then, the second sampling module 702 may determine, based on the third sampling feature and the fourth sampling feature, the second mask result corresponding to the interaction information. The second mask result may be a mask result obtained after one or more of the edge, the missing content, and the redundant content of the first mask result are optimized.

In other words, the second region mask generation model 700 may refine the edge of the first mask result by using the first sampling module 701 and the second sampling module 702, and/or refine the missing or redundant region in the first mask result, so that the finally obtained second mask result can accurately correspond to interaction information entered by the user. In this way, the region that the user wants to select can be accurately determined based on the second mask result, to improve user experience.

It should be noted that the second region mask generation model 700 may be obtained in advance through training by using a training image A training process of the second region mask generation model 700 is not specifically limited in this embodiment of this application, and may be specifically determined based on an actual application scenario. Training of the second region mask generation model 700 may be performed by the electronic device, or may be performed by another device. This is not limited in this embodiment of this application. In addition, the second region mask generation model 700 may be disposed in the electronic device, or may be disposed in another device that is communicatively connected to the electronic device, for example, may be disposed in a cloud that is communicatively connected to the electronic device, to reduce a performance requirement for the electronic device.

In this embodiment of this application, after obtaining the second mask result, the electronic device may determine, based on the second mask result, the target region corresponding to the interaction information. For example, the electronic device may determine, based on the second mask result and the target image, the target region corresponding to the interaction information, that is, determine the region selected through the interaction operation of the user in the target image, so that the user can accurately extract content in the target region or accurately process the content in the target region.

For example, the electronic device may perform an operation on the second mask result and the target image, to obtain the target region in the target image. The target region may be a region that corresponds to the interaction information and that is in the second mask result, that is, the target region may be a region obtained after content of a white region in the second mask result is restored to original content of the white region in the target image.

It should be understood that a specific manner of performing the operation on the second mask result and the target image to obtain the target region whose content is restored to the original content is not limited in this embodiment of this application, and may be determined based on an actual application scenario.

The following describes, by using an example with reference to a specific application scenario, the region selection method provided in embodiments of this application.

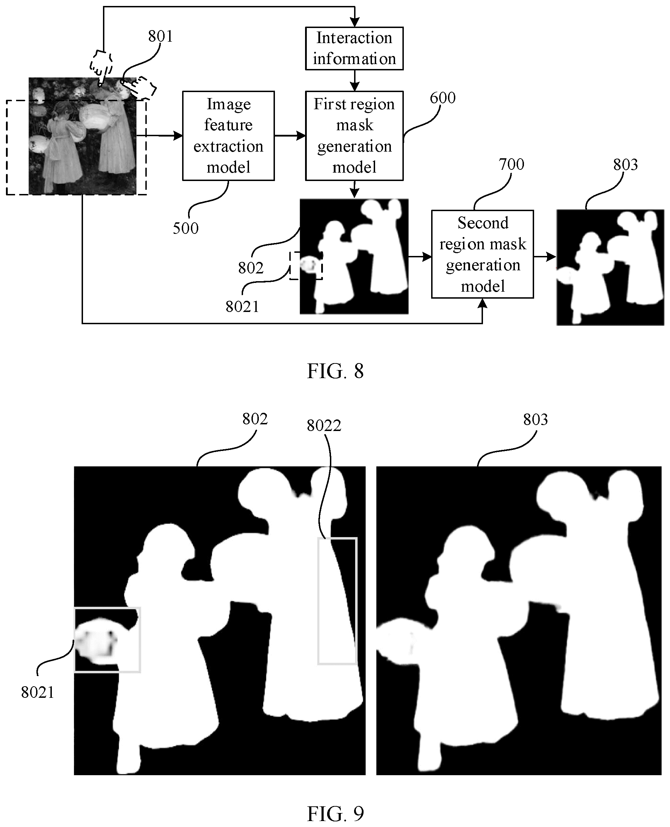

Refer to FIG. 8 and FIG. 9. FIG. 8 and FIG. 9 are a diagram of an application scenario according to an embodiment of this application. The application scenario is described by using an example in which region selection is performed on a target image for a first time.

When the user performs the interaction operation in the target image 801, for example, when the user performs, in the target image 801, a box-selection operation (a dashed line in FIG. 8 indicates a region box-selected through the box-selection operation in the target image) and a tapping operation that are shown in FIG. 8, the electronic device may determine the interaction information corresponding to the interaction operation, and may input the interaction information into the first region mask generation model 600. In addition, the electronic device may further separately input the target image 801 into the image feature extraction model 500 and the second region mask generation model 700.

After obtaining the target image 801, the image feature extraction model 500 may extract an image feature from the target image 801, to obtain the first image feature of the target image 801, for example, a high-dimensional feature of 64*64*256, and may input the first image feature into the first region mask generation model 600.

After obtaining the first image feature and the interaction information, the first region mask generation model 600 may determine, based on the interaction information and the first image feature, a first mask result 802 corresponding to the interaction information. For example, the first region mask generation model 600 may obtain, based on the interaction information and the first image feature, the first mask result 802 shown in FIG. 8. An edge of a white region in the first mask result 802 has jaggies, and a part is missing in the middle position of the left lantern, that is, a black region 8021 shown in FIG. 8.

After obtaining the first mask result 802, the first region mask generation model 600 may output the first mask result 802 to the second region mask generation model 700.

After obtaining the first mask result 802 and the target image 801, the second region mask generation model 700 may optimize the first mask result 802 based on the target image 801, to obtain an optimized second mask result 803. For example, the second region mask generation model 700 may obtain the second mask result 803 shown in FIG. 8.

The second region mask generation model 700 may optimize the edge of the first mask result 802 based on the target image 801, and supplement the missing part in the first mask result 802, so that an edge of the second mask result 803 is smooth, and content in the second mask result 803 is more refined.

For example, as shown in FIG. 9, in the first mask result 802, a right edge 8022 of the white region has jaggies, and in the second mask result 803 obtained through processing by the second region mask generation model 700, a right edge of a white region is smooth. In addition, the first mask result 802 has the missing part. For example, the first mask result 802 has the black region 8021 with missing content, and the second mask result 803 obtained through processing by the second region mask generation model 700 supplements the missing part (for example, the black region 8021) in the first mask result 802, to refine the missing content. In other words, the second mask result 803 obtained by the second region mask generation model 700 has a smoother edge and more refined content, and can accurately correspond to the interaction information of the user, so that the target region that the user wants to select can be accurately determined based on the second mask result, thereby improving user experience.

In this embodiment of this application, when the user selects a region for the target image, the electronic device may obtain the first image feature of the target image and the interaction information for the target image, and input the first image feature and the interaction information into the first region mask generation model for processing, to obtain the first mask result that corresponds to the interaction information and that is output by the first region mask generation model. In addition, the electronic device may input the target image and the first mask result into the second region mask generation model for processing, to obtain the second mask result that corresponds to the interaction information and that is output by the second region mask generation model, and to determine, based on the second mask result, the target region corresponding to the interaction information. The second region mask generation model has a function of optimizing the first mask result output by the first region mask generation model. To be specific, the second region mask generation model may optimize the first mask result based on the target image, to refine an edge of the first mask result, and/or refine a missing region or a redundant region or the like in the first mask result, so that the target region that the user wants to select can be accurately determined based on the second mask result, and the edge of the finally determined target region can be smooth, thereby improving user experience.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Corresponding to the region selection method described in the foregoing embodiments, an embodiment of this application further provides a region selection apparatus. Modules of the apparatus may correspondingly implement the steps of the region selection method.

It should be noted that content such as information exchange and execution processes between the foregoing apparatuses/units are based on a same concept as those in the method embodiments of this application. For specific functions and brought technical effect of the foregoing apparatuses/units, refer to the method embodiments. Details are not described herein again.

It may be clearly understood by persons skilled in the art that, for the purpose of convenient and brief description, division of the foregoing functional units and modules is only used as an example for illustration. In actual application, the foregoing functions may be allocated to different functional units and modules for completion based on a requirement, that is, an internal structure of an apparatus is divided into different functional units or modules to complete all or some of the functions described above. Functional units and modules in embodiments may be integrated into one processing unit, each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units and modules in the foregoing system, refer to a corresponding process in the foregoing method embodiment. Details are not described herein again.

An embodiment of this application further provides an electronic device. The electronic device includes at least one memory, at least one processor, and a computer program that is stored in the at least one memory and that can be run on the at least one processor. When the processor executes the computer program, the electronic device is caused to implement the steps in any one of the foregoing region selection method embodiments. For example, a structure of the electronic device may be shown in FIG. 2.

An embodiment of this application further provides a computer-readable storage medium. The computer-readable storage medium stores a computer program. When the computer program is executed by a computer, the computer is caused to implement the steps in any one of the foregoing region selection method embodiments.

An embodiment of this application provides a computer program product. When the computer program product is run on an electronic device, the electronic device is caused to implement the steps in any one of the foregoing region selection method embodiments.

When an integrated unit is implemented in a form of a software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code. The computer program code may be in a source code form, an object code form, an executable file form, some intermediate forms, or the like. The computer-readable storage medium may include at least any entity or apparatus that can carry the computer program code to an apparatus/electronic device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk drive, a magnetic disk, or a compact disc. In some jurisdictions, the computer-readable storage medium cannot be an electrical carrier signal or a telecommunication signal according to legislation and patent practices.

In the foregoing embodiments, descriptions of embodiments have respective focuses. For a part that is not described in detail or recorded in an embodiment, refer to related descriptions in other embodiments.

Persons of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed apparatus/electronic device and method may be implemented in other manners. For example, the described apparatus/electronic device embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application, and these modifications and replacements shall fall within the protection scope of this application.

## Claims

1. A region selection method, comprising:
obtaining a first image feature of a target image and interaction information for the target image;
inputting the first image feature and the interaction information into a first region mask generation model for processing, to obtain a first mask result that corresponds to the interaction information and that is output by the first region mask generation model;
inputting the target image and the first mask result into a second region mask generation model for processing, to obtain a second mask result that corresponds to the interaction information and that is output by the second region mask generation model, wherein the second region mask generation model has a function of optimizing the first mask result output by the first region mask generation model; and
determining, based on the second mask result, a target region corresponding to the interaction information, wherein the target region is an image region in the target image.

2. The method according to claim 1, wherein obtaining the first image feature of the target image comprises:
inputting the target image into a trained image feature extraction model for processing, to obtain the first image feature output by the image feature extraction model.

3. The method according to claim 2, wherein the image feature extraction model comprises M feature extraction modules and N feature fusion modules, the M feature extraction modules are configured to extract candidate image features that are in different dimensions and that correspond to the target image, and the N feature fusion modules are configured to determine the first image feature based on the candidate image features that are in different dimensions and that are extracted by the M feature extraction modules, wherein M≥2, and N≥1.

4. The method according to claim 2 or 3, wherein after obtaining the first image feature output by the image feature extraction model, the method comprises:
associating the target image with the first image feature for storage, or associating an identifier of the target image with the first image feature for storage.

5. The method according to any one of claims 1 to 4, wherein the first region mask generation model comprises an encoder-decoder module and a convolution module; and
inputting the first image feature and the interaction information into the first region mask generation model for processing, to obtain the first mask result that corresponds to the interaction information and that is output by the first region mask generation model comprises:
inputting the first image feature and the interaction information into the first region mask generation model, and processing the first image feature and the interaction information by using the encoder-decoder module, to obtain a second image feature; and
determining, by using the convolution module, a third image feature from the second image feature, and determining, based on the third image feature, the first mask result corresponding to the interaction information, wherein the third image feature is an image feature that belongs to a same object as an image feature corresponding to the interaction information.

6. The method according to claim 5, wherein the interaction information comprises position information that is of an interaction operation corresponding to the interaction information and that is in the target image.

7. The method according to claim 6, wherein the image feature corresponding to the interaction information is determined from the first image feature based on the position information.

8. The method according to any one of claims 1 to 7, wherein the interaction information comprises first interaction information and second interaction information; and
inputting the first image feature and the interaction information into the first region mask generation model for processing, to obtain the first mask result that corresponds to the interaction information and that is output by the first region mask generation model comprises:
inputting the image feature, the first interaction information, and the second interaction information into the first region mask generation model for processing, to obtain the first mask result output by the first region mask generation model, wherein the first mask result corresponds to the first interaction information and the second interaction information.

9. The method according to any one of claims 1 to 8, wherein the second region mask generation model comprises a first sampling module and a second sampling module; and
inputting the target image and the first mask result into the second region mask generation model for processing, to obtain the second mask result that corresponds to the interaction information and that is output by the second region mask generation model comprises:
inputting the target image and the first mask result into the second region mask generation model, and performing downsampling on the target image and the first mask result separately by using the first sampling module, to obtain a first sampling feature corresponding to the target image and a second sampling feature corresponding to the first mask result; and
performing upsampling on the first sampling feature and the second sampling feature separately by using the second sampling module, to obtain a third sampling feature corresponding to the first sampling feature and a fourth sampling feature corresponding to the second sampling feature, and determining, based on the third sampling feature and the fourth sampling feature, the second mask result corresponding to the interaction information.

10. An electronic device, comprising a memory, a processor, and a computer program that is stored in the memory and that can be run on the processor, wherein when the processor executes the computer program, the electronic device is caused to implement the region selection method according to any one of claims 1 to 9.

11. A computer-readable storage medium, wherein the computer-readable storage medium stores a computer program, and when the computer program is executed by a computer, the computer is caused to implement the region selection method according to any one of claims 1 to 9.
